# EUROPEAN PATENT SPECIFICATION

(11) **EP 3 325 125 B1**
(45) Date of publication and mention of the grant of the patent: **25.09.2024**
(21) Application number: 16828143.4
(22) Date of filing: 27.06.2016
(51) Int. Cl.: B01D 24/36, B01D 21/01, C02F 1/52, C02F 1/74, C02F 101/10, B01D 21/00, C02F 1/00

(54) **METHOD AND APPARATUS FOR WATER TREATMENT**
VERFAHREN UND VORRICHTUNG ZUR WASSERBEHANDLUNG
PROCÉDÉ ET APPAREIL POUR LE TRAITEMENT DE L'EAU

(30) Priority: 17.07.2015 SE 1500309
(43) Date of publication of application: 30.05.2018
(73) Proprietor: DA Innovation, 64795 Åkers styckebruk (SE)
(72) Inventor: ANDERSSON, Daniel, 64795 Åkers styckebruk (SE)
(74) Representative: Brann AB
(86) International application number: PCT/SE2016/050630
(87) International publication number: WO 2017/014687

(56) References cited:
- WO-A1-2010/140968
- WO-A1-2014/063232
- JP-A- 2006 175 400
- JP-A- H0 872 977
- US-A- 4 071 452
- US-A- 4 330 401
- US-A1- 2010 155 327
- US-A1- 2013 140 243

## Description

The present disclosure relates to a method and an apparatus for water treatment.

When treating water to be returned to nature a treatment plant of some kind is typically employed. The treatment in a treatment plant can undergo multiple processes. In one step water to be treated can undergo a chemical treatment. In a step of chemical treatment a chemical substance is added to extract different substances, such as phosphates, from the water using a precipitation process. In precipitation of phosphorus a sludge is formed. The precipitated phosphorus sludge is then removed and is taken care of together with other sludge from the treatment plant.

WO 2014/063232 A1 relates to a system and a method for treating wastewater using a passive phosphorous-capture filter lined with wood activated by the impregnation of a metal in the form of a hydroxide.

JP 2006 175400 A relates to a phosphate ion solidification agent containing a multivalent metal ion enclosed and fixed in hydrophilic gel and a phosphate ion solidification apparatus containing the phosphate ion solidification agent being useful if it is used for a septic tank. The phosphate ion solidification apparatus may have a structure in which a column filled with the phosphate ion solidification agent is installed and target water containing phosphate ion to be treated is passed through the column, or in which a water-permeable container containing the phosphate ion solidification agent is immersed in an immersion tank and object water containing phosphate ion to be treated is passed through the immersion tank.

There is a desire to improve existing treatment processes and reduce the environmental impact caused by existing treatment processes.

It is an object of the present invention to solve the above problem or at least reduce the negative environmental impact caused by existing treatment processes.

This object is at least partly obtained by the invention as set out in the appended claims.

In accordance with one embodiment an apparatus for treatment of water according to claim 1 is provided. The apparatus for treatment of water may comprise a container.

Untreated water can be fed to the container.

When untreated water is fed to the apparatus together with a chemical compound typically a precipitation or flocking agent, chemical compounds in the untreated water such a phosphorus will be precipitated using the precipitation agent. The precipitated chemical compounds will bond to the small particles of the solid substance and small particles having precipitated chemical compounds bonded thereto will during ongoing aerating and under the force of gravity pass downwards through the layer and can be collected in the collection container provided under the layer. The chemical compound in the collection container can then be taken care of and is easy to re-use.

### BRIEF DESCRIPTION OF THE DRAWINGS

The present invention will now be described in more detail by way of non-limiting examples and with reference to the accompanying drawings, in which:
- Fig. 1 is a view of an apparatus for treatment of water according to a first embodiment,
- Fig. 2 is a view of an apparatus for treatment of water according to a second embodiment,
- Fig. 3 is a view of an apparatus for treatment of water according to a third embodiment,
- Fig. 4 is a flow chart illustrating some steps performed when treating water

### DETAILED DESCRIPTION

In the following a water treatment apparatus will be described. In the figures, the same reference numerals designate identical or corresponding elements throughout the several figures. It will be appreciated that these figures are for illustration only and are not in any way restricting the scope of the invention that is defined in the appended claims. Also, it is possible to combine features from different described embodiments to meet specific implementation needs.

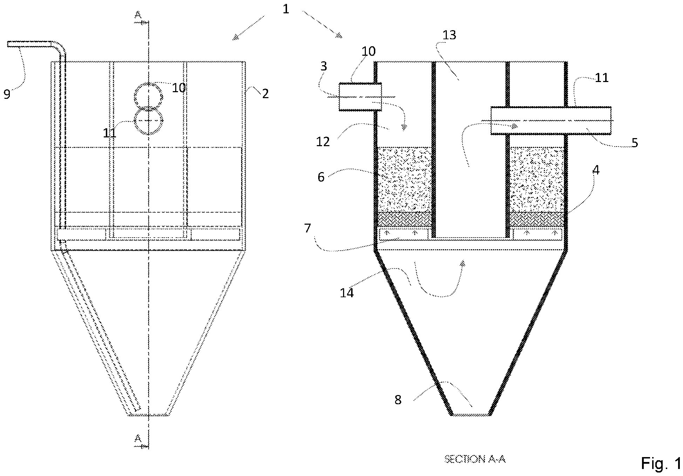

In Fig. 1 a side view and a sectional view along the section A- A of an apparatus 1 for treatment of water is shown. The apparatus 1 comprises a container 2 to which untreated water 3 can be fed via an inlet 10. The flow of water through the apparatus 1 is generally shown by arrows in the figure. The container 2 can generally be divided into two compartments, a first compartment 12 for receiving untreated water and to treat water and a second compartment 13 provided down streams the first compartment 12. An outlet 11 for treated water is in fluid connection with the second compartment via which outlet treated water exits the apparatus 1. Between the first compartment 12 and the second compartment 13 a connecting part 14 can be provided that allows water to flow from the first compartment 12 to the second compartment 13. Thus, in accordance with the present invention the first compartment 12 and the second compartment 13 are communicating vessels. In the container 2 an air permeable layer 4 is provided. The air permeable layer 4 separates the first compartment 12 from the second compartment 13 in the container 2. In the embodiment of Fig. 1, the container 2 is designed with an outer wall forming an outer wall and also inner separation wall separating the first compartment 12 from the second compartment 13. Both the inner separation wall and the outer wall can have a generally circular cross section. Thus, in accordance with the embodiment of Fig. 1 untreated water 3 will first flow into an outer first compartment 12 of the container 2 having a generally annular cross section in which treatment is performed and then be fed to the inner second compartment 13 of the container 2 with a generally circular cross section from which treated water can leave the container. In the embodiment shown in Fig. 1, the connection 14 is formed by a lower section of the container 2. Other types of connections are possible such as a pipe connection. Water can also be pumped between different compartments of the apparatus 1.

The air permeable layer 4 can wholly or partly be made of a polymer material or a fine meshed metal net having a suitable hole dimension. For example, the holes in the layer 4 can have a size in the range 50 -1000 micrometers, in particular 200 - 700 micrometers. In some applications the size of the holes can be bigger for example in the range 0.5 - 2 mm. In the container 2 there is bed of a solid substance 6 having suitable dimensions or a mix of different dimensions. The solid substance 6 can for example be a sand material or a clay material. For example, rock flour, a slag material or a Leca material can be used. The solid substance can advantageously have dimension in the range 50 - 1000 micrometers. The solid substance 6 can also comprise particles with bigger dimensions that in use will split into particles with smaller particle sizes. For example, the solid substance 6 can when aerated have properties such that the particles of the solid substance will split into particles of smaller sizes at a suitable rate such that smaller particles of the solid substance 6 is continuously formed or is formed when the solid substance is aerated.

In accordance with one embodiment the solid substance 6 can be supplied during the treatment process performed in the apparatus 1 such that there is always a suitable amount of particles of the solid substance in the first compartment 12 that phosphorous compounds can bond to. The supply of the solid substance 6 can for example take place continuously or when untreated water is fed to the first compartment 12.

The air permeable layer 4 is further designed so that the solid substance 6 rests on top of the air permeable layer and such that small particles of the solid substance pass through the layer 4 when air passes up through the layer as is described below. This can be said to be analogous to an aerated sand filter or a fluidized bed. A bed is provided in the first compartment 12 of the container 2. The bed comprises a solid substance of small particles and the untreated water is located on top of the bed.

Under the air permeable layer 4 an aerating device 7 is located. The aerating device is provided to generate air under the air permeable layer 4 so that air will rise through the layer 4 and aerate the bed of solid substance particles 6 on top of the layer 4 and the water 3 inside the first compartment 12 of the container 2. The layer 4 can, in accordance with one embodiment, be aerated under only a part, such as a central part, of the layer 4. Under the layer 4 a collection container 8 is also located. In the example of Fig. 1, the collection container 8 is formed by the bottom of the connection 14. In other embodiments a separate collection container 8 can be provided. The collection container 8 can then be removable for emptying or exchange of the collection container 8. The shape of the collection container 8 can in accordance with some embodiments be tapered for example conically tapered.

The apparatus 1 is provided with a feed device for feeding a precipitation agent or flocking agent. In accordance with one embodiment a flocking agent is added when treatment of water is performed. Examples of suitable flocking agents when water is to be purified from phosphorus are solutions comprising aluminium, iron or calcium. In accordance with some embodiments aluminium sulfate or aluminium chloride can be added in solid or liquid form. In accordance with some embodiments, suitable forms of iron chloride or calcium chloride is used.

In the apparatus 1 an emptying device 9 for removal of precipitated materials collected in the container 8 can also be provided. The emptying device 9 can for example be adapted to vacuum/suck solid materials from the container 8.

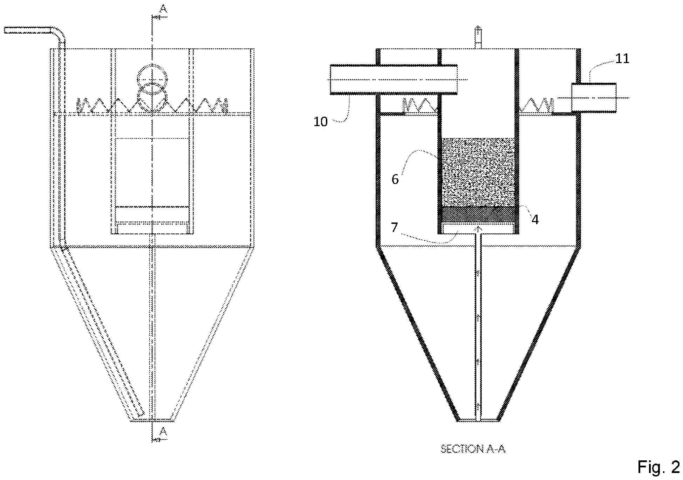

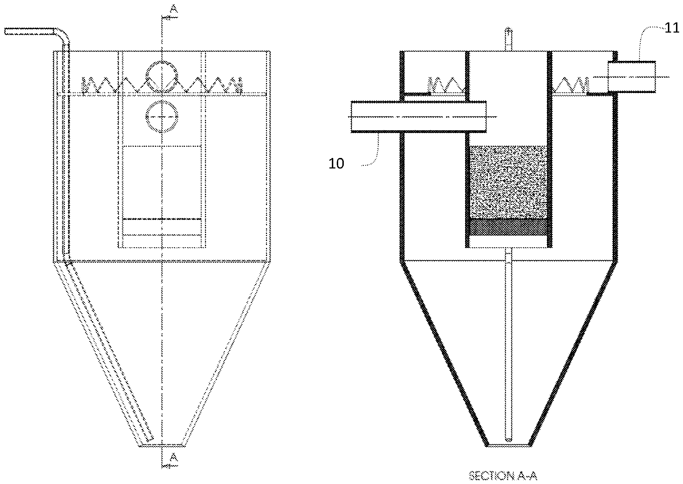

In fig. 2 another embodiment of the apparatus 1 is shown. In Fig. 2 the inlet is provided in the center of the container 2 and the outlet is connected to an outer section of the container 2. Other possible embodiments include a configuration where the outlet 11 unlike in Fig. 1 and Fig. 2 is located at a higher level than the inlet 10. Such an embodiments shown in Fig. 3. It is also possible to arrange the inlet 10 and the outlet 11 at essentially the same level. In accordance with some embodiments the outlet 11 is located at a level above the layer 4 that is provided inside the apparatus 1.

Further modifications of the apparatus are possible. For example, the container 2 does not necessarily need to be made as one single container but can instead be divided into two or more serially connected containers in communication with each other. For example, one or more of the parts 12, 13, 14 can be formed as separate containers connected to each other so that untreated water can be fed to the part 12 to then pass the part 14 before the water reaches the part 13. In such a set-up a collector container 8 still needs to be provided below the layer 4 for collection of particles passing down through the layer 4. Water can be transferred between the different part by pressure or in accordance with some embodiments by pumping.

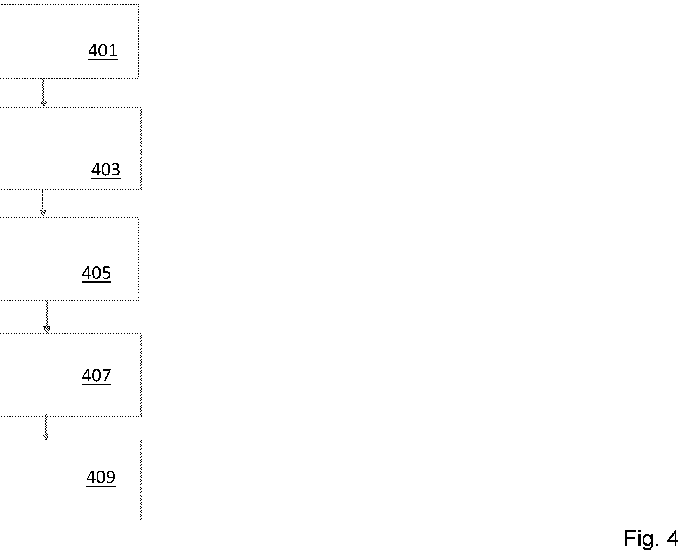

In Fig. 4 a flowchart describing different steps performed in the apparatus 1 when treating water therein. First, in a step 401, untreated water, for example comprising phosphates, is fed to the container 2 a treatment process is started. In the treatment process a chemical substance is added to the first compartment to extract a substance from the untreated water in a step 403 and the bed comprising a solid substance of small particles 6 is aerated through the layer 4. The added chemical substance is a precipitation or flocking agent. The chemical substance will bond the phosphorus substance in the water and the chemical compounds then formed will bond onto the small particles of the solid substance in the bed 6 (or onto small particles added) that is aerated by the aerating device 7 in a step 405.

Through the aerating process the small particles having a chemical compound comprising phosphorus will also be able to pass downwards through the layer under the force of gravity to the collection container 8 located thereunder. The small particles will then be collected in the collection container in a step 407. As more untreated water is supplied water is pressed (or pumped) down streams through the apparatus to the second compartment 13 via the connection 14. Water reaching the second compartment 13 is purified from e.g. phosphorus substances and treated water can leave the container 2 in a step 409.

Thus, the collection container 8 collects very small particles (small enough to pass down through the layer when the layer is aerated) and these particles have chemical compounds comprising phosphorus bonded thereon (or whatever substance the apparatus is designed to purify the water from). The collection container 8 can then be emptied in a suitable manner. As set out above the emptying can be performed by vacuuming using the emptying device 9 or by removal/ exchange of the collection container 8. The material in the container 6 will, in case phosphorus is removed from the water, comprise a chemical compound comprising phosphorus that is easy to recirculate. If, for example, aluminium is used in the flocking agent the solid material in the collection container 8 will comprise aluminium phosphate bonded to the small particles in the solid substance.

In accordance with one embodiment, aerating is only performed when untreated water is supplied to thereby reduce consumption of the solid substance in the bed 6. Further, dosing of the flocking agent can be made in response to the current supply of untreated water. As set out above, the solid substance can also be dosed and continuously be added in the corresponding manner as the chemical substance, e.g. a flocking agent. Adding of the solid substance can be performed using a feeding device.

It is to be noted that the shape of the container can be any shape and does not need to be circular. For example, the container can be square or rectangular. Further the apparatus is suitable to purify water from different chemical compounds and not only phosphorus substances. For example, different metals such as copper and also cadmium can be removed from the water using the apparatus. The flocking agent used is then adapted to the chemical compound to be removed from the water by the apparatus.

The water treatment apparatus and water treatment process described herein is easy to implement and provides a residue, for example phosphorus compounds, that are easy to re- use since the chemical compounds removed from the water are separated from sludge.

## Claims

1. An apparatus (1) for treatment of water comprising a first compartment (12), wherein untreated water (3) together with a precipitation agent or flocking agent can be fed to the first compartment (12), the apparatus comprising:
- an inlet (10) for the untreated water (3), which inlet (10) leads to the first compartment (12), wherein the first compartment (12) is adapted to receive a solid substance,
- an air permeable layer (4) down streams the first compartment (12), wherein the air permeable layer (4) is configured such that small particles of the solid substance are able to pass through the air permeable layer (4) when air passes up through the air permeable layer (4),
- a bed of solid substance having small particles (6) received by the first compartment (12) on top of the air permeable layer (4),
- an aerating device (7) located beneath the air permeable layer and provided to generate air under the air permeable layer (4) so that, when the apparatus is in use, air will rise through the air permeable layer (4) and aerate the bed of solid substance (6) and water (3) inside the first compartment (12),
- a second compartment (13) located down streams said air-permeable layer, wherein the air permeable layer (4) separates the first compartment (12) from the second compartment (13), - a collection container (8) located beneath the air permeable layer (4) for collection of the small particles of the solid substance passing downwards through the air permeable layer (4) during aerating,
- an outlet (11) for treated water (5) from the second compartment (13),
- a feed device for feeding the precipitation agent or flocking agent to the first compartment, and
- a feeding device for feeding the solid substance to the first compartment (12).

2. The apparatus according to claim 1, comprising a container (2), wherein the container (2) has a generally circular cross section in a horizontal direction and wherein the container comprises both the first compartment (12) and the second compartment (13).

3. The apparatus according to claim 1 or 2, wherein the outlet (11) is located at a level above the level of the air permeable layer (4).

4. The apparatus according to any of claims 1-3, further comprising an emptying device (9) configured to remove collected particles of the solid substance (6) from the collection container (8)

5. The apparatus according to claim 4, wherein the emptying device is adapted to suck solid substances from the collection container (8).

6. The apparatus according to any of claims 1 - 5, wherein the small particles comprise one or more of a rock material, a clay material or a slag material.

7. The apparatus according to any of claims 1 - 6, wherein the small particles have a dimension in the range 50 - 1000 micrometers.

8. The apparatus according to any of claims 1-7, wherein the air permeable layer (4) comprises at least one of a polymer material and a metal net.

9. The apparatus according to any of claims 1 - 8, wherein the collection container (8) is separately removable from the apparatus.

10. A method for treatment of water using an apparatus according to any one of claims 1 to 9, the method comprising
- providing (401) untreated water (3) to the first compartment (12),
- providing (403) the precipitation or flocking agent to the first compartment (12) to extract a substance from the untreated water in the first compartment and providing the solid substance (6) having small particles to the first compartment (12),
- aerating (405) the mixture in the first compartment (12) to let an extracted substance bond to the small particles of the solid substance,
- by aerating the air permeable layer (4), allowing small particles having the extracted substance bonded thereto pass (407) under the force of gravity down through the layer to a collection container (8) located underneath the air permeable layer (4),
- output (409) treated water (5) from the second compartment (13) located down streams the air permeable layer (4).

11. The method according to claim 10, wherein particles passing down through the air permeable layer (4) comprise a chemical compound comprising phosphorus.

## Patentansprüche

1. Vorrichtung (1) zur Behandlung von Wasser, umfassend eine erste Kammer (12), wobei unbehandeltes Wasser (3) zusammen mit einem Fällungsmittel oder Flockungsmittel der ersten Kammer (12) zugeführt werden kann, wobei die Vorrichtung Folgendes umfasst:
- einen Einlass (10) für das unbehandelte Wasser (3), wobei der Einlass (10) zu der ersten Kammer (12) führt, wobei die erste Kammer (12) dazu angepasst ist, eine feste Substanz aufzunehmen,
- eine luftdurchlässige Schicht (4) stromabwärts von der ersten Kammer (12), wobei die luftdurchlässige Schicht (4) derart konfiguriert ist, dass kleine Partikel der festen Substanz durch die luftdurchlässige Schicht (4) gelangen können, wenn Luft durch die luftdurchlässige Schicht (4) nach oben gelangt,
- ein Bett aus fester Substanz, die kleine Partikel (6) aufweist, die von der ersten Kammer (12) oben auf der luftdurchlässigen Schicht (4) aufgenommen wurden,
- eine Belüftungseinrichtung (7), die sich unterhalb der luftdurchlässigen Schicht befindet und bereitgestellt ist, um Luft unter der luftdurchlässigen Schicht (4) so zu erzeugen, dass, wenn die Vorrichtung verwendet wird, Luft durch die luftdurchlässige Schicht (4) aufsteigt und das Bett aus fester Substanz (6) und Wasser (3) innerhalb der ersten Kammer (12) belüftet,
- eine zweite Kammer (13), die sich stromabwärts von der luftdurchlässigen Schicht befindet, wobei die luftdurchlässige Schicht (4) die erste Kammer (12) von der zweiten Kammer (13) trennt,
- einen Sammelbehälter (8), der sich unterhalb der luftdurchlässigen Schicht (4) zum Sammeln der kleinen Partikel der festen Substanz befindet, die beim Belüften durch die luftdurchlässige Schicht (4) nach unten gelangen,
- einen Auslass (11) für behandeltes Wasser (5) aus der zweiten Kammer (13),
- eine Zuführeinrichtung zum Zuführen des Fällungsmittels oder Flockungsmittels zu der ersten Kammer, und
- eine Zuführeinrichtung zum Zuführen der festen Substanz zu der ersten Kammer (12).

2. Vorrichtung nach Anspruch 1, umfassend einen Behälter (2), wobei der Behälter (2) einen allgemein kreisförmigen Querschnitt in einer horizontalen Richtung aufweist und wobei der Behälter sowohl die erste Kammer (12) als auch die zweite Kammer (13) umfasst.

3. Vorrichtung nach Anspruch 1 oder 2, wobei sich der Auslass (11) auf einem Niveau oberhalb des Niveaus der luftdurchlässigen Schicht (4) befindet.

4. Vorrichtung nach einem der Ansprüche 1 - 3, ferner umfassend eine Entleerungseinrichtung (9), die dazu konfiguriert ist, gesammelte Partikel der festen Substanz (6) aus dem Sammelbehälter (8) zu entfernen.

5. Vorrichtung nach Anspruch 4, wobei die Entleerungseinrichtung dazu angepasst ist, feste Substanzen aus dem Sammelbehälter (8) abzusaugen.

6. Vorrichtung nach einem der Ansprüche 1 - 5, wobei die kleinen Partikel eines oder mehrere von einem Gesteinsmaterial, einem Tonmaterial oder einem Schlackenmaterial umfassen.

7. Vorrichtung nach einem der Ansprüche 1 - 6, wobei die kleinen Partikel eine Größe in dem Bereich von 50 - 1000 Mikrometer aufweisen.

8. Vorrichtung nach einem der Ansprüche 1 - 7, wobei die luftdurchlässige Schicht (4) mindestens eines von einem Polymermaterial und einem Metallnetz umfasst.

9. Vorrichtung nach einem der Ansprüche 1 - 8, wobei der Sammelbehälter (8) getrennt von der Vorrichtung entfernbar ist.

10. Verfahren zur Behandlung von Wasser unter Verwendung einer Vorrichtung nach einem der Ansprüche 1 bis 9, wobei das Verfahren Folgendes umfasst:
- Bereitstellen von (401) unbehandeltem Wasser (3) für die erste Kammer (12),
- Bereitstellen (403) des Fällungs- oder Flockungsmittels für die erste Kammer (12), um eine Substanz aus dem unbehandelten Wasser in der ersten Kammer zu extrahieren und Bereitstellen der festen Substanz (6), die kleine Partikel aufweist, für die erste Kammer (12),
- Belüften (405) des Gemisches in der ersten Kammer (12), um eine extrahierte Substanz mit den kleinen Partikeln der festen Substanz binden zu lassen,
- durch das Belüften der luftdurchlässigen Schicht (4), Ermöglichen, dass kleine Partikel, an welche die extrahierte Substanz gebunden ist, unter der Schwerkraft durch die Schicht nach unten zu einem Sammelbehälter (8) gelangen (407), der sich unterhalb der luftdurchlässigen Schicht (4) befindet,
- Ausgeben (409) von behandeltem Wasser (5) aus der zweiten Kammer (13), die sich stromabwärts von der luftdurchlässigen Schicht (4) befindet.

11. Verfahren nach Anspruch 10, wobei Partikel, die durch die luftdurchlässige Schicht (4) nach unten gelangen, eine chemische Verbindung umfassen, die Phosphor umfasst.

## Revendications

1. Appareil (1) de traitement de l'eau comprenant un premier compartiment (12), dans lequel de l'eau non traitée (3) conjointement avec un agent de précipitation ou un agent de flocage peut être introduite dans le premier compartiment (12), l'appareil comprenant :
- une entrée (10) pour l'eau non traitée (3), laquelle entrée (10) mène au premier compartiment (12), dans lequel le premier compartiment (12) est adapté pour recevoir une substance solide,
- une couche perméable à l'air (4) en aval du premier compartiment (12), dans lequel la couche perméable à l'air (4) est configurée de sorte que de petites particules de la substance solide puissent passer à travers la couche perméable à l'air (4) lorsque de l'air remonte à travers la couche perméable à l'air (4),
- un lit de substance solide ayant de petites particules (6) reçues par le premier compartiment (12) au-dessus de la couche perméable à l'air (4),
- un dispositif d'aération (7) situé au-dessous de la couche perméable à l'air et prévu pour générer de l'air sous la couche perméable à l'air (4) de sorte que, lorsque l'appareil est en cours d'utilisation, de l'air monte à travers la couche perméable à l'air (4) et aère le lit de substance solide (6) et l'eau (3) à l'intérieur du premier compartiment (12),
- un deuxième compartiment (13) situé en aval de ladite couche perméable à l'air, dans lequel la couche perméable à l'air (4) sépare le premier compartiment (12) du deuxième compartiment (13),
- un récipient de collecte (8) situé au-dessous de la couche perméable à l'air (4) pour la collecte des petites particules de la substance solide descendant à travers la couche perméable à l'air (4) pendant l'aération,
- une sortie (11) pour de l'eau traitée (5) provenant du deuxième compartiment (13),
- un dispositif d'introduction pour introduire l'agent de précipitation ou l'agent de flocage dans le premier compartiment, et
- un dispositif d'amenée pour amener la substance solide dans le premier compartiment (12).

2. Appareil selon la revendication 1, comprenant un récipient (2), dans lequel le récipient (2) présente une section transversale généralement circulaire dans une direction horizontale et dans lequel le récipient comprend à la fois le premier compartiment (12) et le deuxième compartiment (13).

3. Appareil selon la revendication 1 ou 2, dans lequel la sortie (11) se trouve à un niveau situé au-dessus du niveau de la couche perméable à l'air (4).

4. Appareil selon l'une quelconque des revendications 1 à 3, comprenant en outre un dispositif de vidange (9) configuré pour éliminer, du récipient de collecte (8), les particules collectées de la substance solide (6).

5. Appareil selon la revendication 4, dans lequel le dispositif de vidange est adapté pour aspirer des substances solides du récipient de collecte (8).

6. Appareil selon l'une quelconque des revendications 1 à 5, dans lequel les petites particules comprennent une ou plusieurs parmi une matière rocheuse, une matière argileuse ou une matière de laitier.

7. Appareil selon l'une quelconque des revendications 1 à 6, dans lequel les petites particules ont une dimension dans la plage de 50 à 1000 micromètres.

8. Appareil selon l'une quelconque des revendications 1 à 7, dans lequel la couche perméable à l'air (4) comprend au moins l'un d'un matériau polymère et d'un treillis métallique.

9. Appareil selon l'une quelconque des revendications 1 à 8, dans lequel le récipient de collecte (8) peut être retiré séparément de l'appareil.

10. Procédé de traitement de l'eau utilisant un appareil selon l'une quelconque des revendications 1 à 9, le procédé comprenant :
- la fourniture (401) d'eau non traitée (3) au premier compartiment (12),
- la fourniture (403) de l'agent de précipitation ou de flocage au premier compartiment (12) pour extraire une substance de l'eau non traitée dans le premier compartiment et la fourniture de la substance solide (6) ayant de petites particules au premier compartiment (12),
- l'aération (405) du mélange dans le premier compartiment (12) pour laisser une substance extraite liée aux petites particules de la substance solide,
- par aération de la couche perméable à l'air (4), le fait de permettre aux petites particules ayant la substance extraite liée à celles-ci de descendre (407), sous la force de gravité, à travers la couche jusqu'à un récipient de collecte (8) situé en aval de la couche perméable à l'air (4),
- la sortie (409) de l'eau traitée (5) du deuxième compartiment (13) situé en aval de la couche perméable à l'air (4).

11. Procédé selon la revendication 10, dans lequel les particules descendant à travers la couche perméable à l'air (4) comprennent un composé chimique comprenant du phosphore.
